# NEUE EUROPÄISCHE PATENTSCHRIFT

(11) **EP 3 099 541 B2**
(45) Veröffentlichungstag und Bekanntmachung des Hinweises auf die Entscheidung über den Einspruch: **02.03.2022**
(45) Hinweis auf die Patenterteilung: 11.07.2018
(21) Anmeldenummer: 15701665.0
(22) Anmeldetag: 07.01.2015
(51) Int. Cl.: B60R 25/24, G07C 9/00

(54) **MONTAGEMODUL**
ASSEMBLY MODULE
MODULE DE MONTAGE

(30) Priorität: 31.01.2014 DE 102014101190
(43) Veröffentlichungstag der Anmeldung: 07.12.2016
(73) Patentinhaber: Huf Hülsbeck & Fürst GmbH & Co. KG, 42551 Velbert (DE)
(72) Erfinder: SCHINDLER, Mirko, 42549 Velbert (DE); STICHERLING, Nadine, 45257 Essen (DE); MÖNIG, Stefan, 58332 Schwelm (DE); SCHUMACHER, Helmut, 48653 Coesfeld (DE); ZIEGLER, Alexander, 42489 Wülfrath (DE); LINDIC, Iko, 45149 Essen (DE); HACHE, Christof, 42551 Velbert (DE); MÜLLER, Oliver, 42551 Velbert (DE); HELLER, Norbert, 47929 Grefrath (DE); YOMKIL MALABO, Jean, 45139 Essen (DE); ETTE, Bernd, 38442 Wolfsburg (DE)
(74) Vertreter: Patentanwälte Bals & Vogel
(86) Internationale Anmeldenummer: PCT/DE2015/100011
(87) Internationale Veröffentlichungsnummer: WO 2015/113557

(56) Entgegenhaltungen:
- EP-A1- 1 808 820
- WO-A1-2013/037806
- DE-A1-102007 050 094
- DE-A1-102008 021 989
- DE-A1-102009 023 594
- DE-A1-102010 033 818
- DE-A1-102010 056 171
- DE-A1-102011 115 760
- DE-B3-102005 032 402
- JP-A- H11 200 683
- US-A1- 2011 103 643
- HARRY SCHADE: "Technische Optik", Friedr. Vieweg + Sohn, 1969,
- "Sensoren im Kraftfahrzeug", Bosch Fachinformation Automobil, 2010,

## Beschreibung

Die Erfindung betrifft ein Montagemodul für ein Kraftfahrzeug mit einem optischen Sensorsystem gemäß dem Patentanspruch 1. Ferner betrifft die Erfindung ein Verfahren zum Auslösen mindestens eines Signals für ein Kraftfahrzeug gemäß dem unabhängigen Anspruch 22. Aus der DE10 2005 034 402 B3 ist ein Verfahren zum Nachweis einer Berechtigung zum Ver- oder Entriegeln eines Objekts sowie eine entsprechende Sicherheitsvorrichtung bekannt, welches eine optoelektronische Messvorrichtung umfasst.

Die DE 10 2008 021 989 A1 offenbart eine Lichtquelle, durch die ein für den Benutzer sichtbares Bedienfeld ausgebildet wird. Das Bedienfeld ist auf einen geringen Teilbereich einer Bodenfläche, der in etwa einer Größe zweier Schuhabdrücke entspricht, begrenzt. Das Bedienfeld wird ausgebildet, wenn eine Personenannäherung durch einen nicht näher genannten Sensor detektiert worden ist. Der Benutzer kann das Bedienfeld mit einem Fuß bewusst berühren und damit eine Authentifizierungsüberprüfung zu einer Zugangsberechtigung starten.

Nachteilig hieran ist, dass zunächst eine Personenannäherung mit einem weiteren Sensor detektiert werden muss, bevor die Authentifizierungsüberprüfung gestartet wird. Zudem muss der Benutzer zum Starten der Authentifizierungsüberprüfung bereits nahe dem Kraftfahrzeug sein und bewusst ein sichtbares Bedienfeld betreten. Somit muss der Benutzer aktiv werden, um die Authentifizierungsüberprüfung zu starten. Dieses ist für den Benutzer zeitaufwändig.

Ferner ist bekannt, eine Authentifizierungsüberprüfung durch einen kapazitiven Sensor zu starten. Hierzu muss der Benutzer aber bereits eine Öffnungsbewegung ausführen, z. B. in einen Türgriff eines Kraftfahrzeuges greifen.

Es ist daher die Aufgabe der vorliegenden Erfindung, ein Montagemodul für ein Kraftfahrzeug und ein Verfahren zum Auslösen zumindest eines Signals für ein Kraftfahrzeug bereitzustellen, das zumindest einen der vorgenannten Nachteile beseitigt, insbesondere ermöglicht, dass eine Authentifizierungsüberprüfung unbemerkt und/oder frühzeitig für den Benutzer und/oder gezielt für einen sich nähernden Benutzer gestartet wird.

Zur Lösung der Aufgabe wird ein Montagemodul mit sämtlichen Merkmalen des Anspruches 1 vorgeschlagen. Vorteilhafte Weiterbildungen des Montagemoduls sind in den abhängigen Vorrichtungsansprüchen angegeben. Die Aufgabe wird weiterhin gelöst durch ein Verfahren gemäß dem unabhängigen Anspruch 22. Ferner wird ein Authentifizierungssystem mit einem erfindungsgemäßen Montagemodul, einem ID-Geber und einem Zugangskontrollsystem im Anspruch 21 unter Schutz gestellt. Merkmale und Details, die im Zusammenhang mit dem erfindungsgemäßen Montagemodul und/oder Authentifizierungssystem beschrieben sind, gelten dabei auch im Zusammenhang mit dem erfindungsgemäßen Verfahren und umgekehrt. Dabei können die in den Ansprüchen und in der Beschreibung erwähnten Merkmale jeweils einzeln für sich oder in Kombination erfindungswesentlich sein.

Erfindungsgemäß weist das Montagemodul ein optisches Sensorsystem auf, das geeignet ist,
a) einen außerhalb des Kraftfahrzeugs liegenden Detektionsbereich zu überwachen, um eine Nähe eines Benutzers festzustellen,
b) im Falle eines Erkennens des Benutzers im Detektionsbereich ein Signal für den Start einer Authentifizierungsüberprüfung zwischen einem ID-Geber und einem Zugangskontrollsystem des Kraftfahrzeuges auszulösen.

Erfindungswesentlich ist zum einen, dass durch das optische Sensorsystem bereits eine Nähe eines Benutzers festgestellt werden kann. Hierdurch muss kein weiterer Sensor vorhanden sein, der eine Annäherung eines Benutzers feststellt. Die Nähe des Benutzers wird durch das Erkennen des Benutzers im Detektionsbereich festgestellt. Es ist aber denkbar, dass weitere Anforderungen an das Erkennen des Benutzers im Detektionsbereich erfüllt sein müssen, bevor ein Signal für den Start der Authentifizierungsüberprüfung ausgelöst wird. Bei der Nähe eines Benutzers handelt es sich um die Nähe zum optischen Sensorsystem und/oder zum Kraftfahrzeug. Schritt b) erfolgt insbesondere nach Schritt a).

Erfindungswesentlich ist weiterhin, dass ein optisches Sensorsystem den Detektionsbereich überwacht. Durch den Einsatz eines optischen Sensorsystems kann das Erkennen eines Benutzers auf den vorgegebenen, als Raumabschnitt abgrenzbaren Detektionsbereich außerhalb des Kraftfahrzeuges festgelegt sein. Die Größe und Form des Detektionsbereichs ergeben sich aus dem Aufbau des optischen Sensorsystems. Hierbei ist z. B. möglich, den Detektionsbereich so festzulegen, dass der Benutzer vor Einleitung einer Öffnungsbewegung im Detektionsbereich erkannt wird. Der Benutzer kann somit frühzeitiger als bei Verwendung eines kapazitiven Sensors erkannt werden. Andererseits ist es möglich, den Detektionsbereich auf einen vorgegebenen Raumabschnitt zu beschränken, was z. B. bei einer Verwendung eines Hochfrequenzsignales zum Erkennen eines Benutzers nicht möglich wäre. Somit können nur Benutzer, die sich nahe dem optischen Sensorsystems befinden, erkannt werden. Somit kann durch den durch das optische Sensorsystem festgelegten Detektionsbereich ein Benutzer zum einen frühzeitig und zum anderen gezielt erkannt werden.

Dadurch, dass der Detektionsbereich überwacht wird und im Falle eines Erkennens des Benutzers im Detektionsbereich die Authentifizierungsüberprüfung gestartet wird, ist insbesondere keine aktive Handlung eines Benutzers notwendig, um den Start einer Authentifizierungsüberprüfung vorzunehmen. Vielmehr wird vorzugsweise von dem Benutzer unbemerkt der Start der Authentifizierungsüberprüfung eingeleitet. Somit kann vorgesehen sein, dass das optische Sensorsystem eine Passive-Keyless-Entry-Überprüfung einleitet. Unter einer Passive-Keyless-Entry-Überprüfung wird ein Verfahren verstanden, bei dem unbemerkt durch den Benutzer eine Authentifizierungsüberprüfung stattfindet. Die Authentifizierungsüberprüfung bei einer Passive-Keyless-Entry-Überprüfung muss der Benutzer nicht durch eine bewusste Handlung, z. B. Bedienen des ID-Gebers, einleiten. Das Montagemodul kann z. B. dazu ausgebildet sein, so eingebaut zu werden, dass sich der Detektionsbereich zumindest teilweise oberhalb einer Bodenfläche, auf der das Kraftfahrzeug steht, befindet. Hierdurch ist der Detektionsbereich nicht nur auf einen geringen Teilbereich einer Bodenfläche vor einem Kraftfahrzeug beschränkt. Es kann sein, dass der Detektionsbereich in Kraftfahrzeugnähe oberhalb der Bodenfläche beginnt und dann schräg bis zu Erreichen der Bodenfläche verläuft. Hierbei endet der Detektionsbereich an der Bodenfläche. Alternativ kann der Detektionsbereich zumindest teilweise oberhalb der Bodenfläche enden. In einer besonderen Ausführungsform befindet sich der Detektionsbereich vollständig oberhalb der Bodenfläche. Ein Ende des Detektionsbereichs kann sich in diesem Fall durch eine zu geringe Lichtintensität, mit der der Detektionsbereich beleuchtet wird, in einer gewissen Entfernung zum optischen Sensorsystem ergeben.

Das optische Sensorsystem kann einen optischen Sensor aufweisen. Der optische Sensor kann ausgebildet sein, Licht aus dem Detektionsbereich zu empfangen. Der optische Sensor nimmt Bilder des Detektionsbereichs auf Hierzu kann der optische Sensor ein Linsensystem aufweisen. Jedes Bild kann insbesondere aus einer Gesamtzahl von Pixeln zusammengesetzt sein. Der optische Sensor kann einen Bildsensor aufweisen, der die Gesamtzahl der Pixel aufweist Der Bildsensor kann ein CMOS-Sensor und/oder ein LDPD-Sensor sein. Der LDPD-Sensor (Lateral Drift Field Photodetector) ist in der Druckschrift DE 10 2009 020 218 B3 beschrieben. Der LDPD-Sensor ist geeignet, besonders schnell ausgewertet zu werden.

Das optische Sensorsystem weist ein Lichtmodul zum Emittieren von Licht auf. Das Licht dient dazu, den Detektionsbereich entstehen zu lassen. Hierzu kann das Lichtmodul ein Linsensystem aufweisen. Es kann vorgesehen sein, dass der Detektionsbereich für den Benutzer unsichtbar ist. Hierzu emittiert das Lichtmodul Licht im nicht sichtbaren Bereich. Insbesondere kann es sich bei dem Licht um Infrarotstrahlen, insbesondere um nahe Infrarotstrahlen, handeln. Das Lichtmodul kann nur eine Lichtquelle aufweisen. Alternativ kann das Lichtmodul mehrere Lichtquellen aufweisen. Die Lichtquellen können um den optischen Sensor angeordnet sein. So können z. B. Lichtquellen links und rechts von dem optischen Sensor angeordnet sein. Alternativ können die Lichtquellen um den Umfang des optischen Sensors herum angeordnet sein. Bei dem Licht kann es sich um Laserlicht handeln.

Insbesondere kann der Detektionsbereich durch die Überlagerung von einem Sendebereich des Lichtmoduls und einem Empfangsbereich des optischen Sensors gebildet sein. Bevorzugt ist der Detektionsbereich durch die gesamte Überlagerung des Sendebereichs mit dem Empfangsbereich ausgebildet. Der Sendebereich des Lichtmoduls ergibt sich aus dem Bereich, in dem das Lichtmodul Licht von ausreichender Intensität emittiert. Der Empfangsbereich ergibt sich aus dem Bereich, aus dem der optische Sensor Licht empfangen kann. Der Sendebereich des Lichtmoduls kann aus den Sendebereichen der einzelnen Lichtquellen zusammengesetzt sein. Alternativ kann der Sendebereich auf die Überlagerung der Sendebereiche der einzelnen Lichtquellen beschränkt sein. Der Empfangsbereich und/oder der Sendebereich jeder Lichtquelle kann einen kegelstumpfförmigen Bereich aufweisen. Hierbei kann die Spitze des kegelstumpfförmigen Bereichs am optischen Sensor bzw. an der Lichtquelle angeordnet sein. Vorzugsweise weist der Detektionsbereich einen kegelstumpfförmigen Bereich auf. Die jeweiligen Kegelstümpfe können eine runde oder elliptische Grundfläche aufweisen. Der kegelstumpfförmige Bereich des Detektionsbereich kann insbesondere einem schrägen Kegelstumpf entsprechen.

Das optische Sensorsystem kann ferner eine Überwachungseinheit zum Auswerten des optischen Sensors aufweisen. Die Überwachungseinheit kann dazu ausgebildet sein, Bilder auszuwerten, die vom optischen Sensor aufgenommen worden sind. Hierbei kann es sich um Bilder des Detektionsbereichs handeln.

Es kann sein, dass das optische Sensorsystem ausgebildet ist, Erkennungsbilder und Vergleichsbilder aufzunehmen und gegebenenfalls auszuwerten. Erkennungsbilder entstehen mit Hilfe der Reflexion des emittierten Licht des Lichtmoduls. Vergleichsbilder entstehen nur mit Hilfe des Störlichts. Zum Entstehen der Vergleichsbilder emittiert das Lichtmodul kein Licht. Die Überwachungseinheit kann durch Vergleich eines Erkennungsbildes und eines Vergleichsbildes das Störlicht erkennen. Die Überwachungseinheit kann hierdurch ein modifiziertes Erkennungsbild generieren, aus dem das Störlicht entfernt ist. Das optische Sensorsystem kann so ausgebildet sein, dass jeweils nach einer vorgegebenen Anzahl von Erkennungsbildern ein Vergleichsbild aufgenommen wird.

Durch die o. g. Maßnahmen ist es möglich, dass das optische Sensorsystem ein Bild, das nur durch das Licht des Lichtmoduls erzeugt ist, generiert.

Es ist vorgesehen, dass das optische Sensorsystem dazu ausgebildet ist, den Detektionsbereich dauerhaft bei einem abgestellten Kraftfahrzeug bis zu einer erfolgreichen Authentifizierung zu überwachen. Hierbei bedeutet dauerhaft, dass das optische Sensorsystem dazu ausgebildet ist, nach jeder vorgegebenen Zeitspanne t ein Bild aufzunehmen und/oder auszuwerten.

Ebenso kann durch die Wahl einer großen Zeitspanne t Energie gespart werden. So ist es vorgesehen, dass im Ruhemodus die Zeitspanne t größer gewählt ist als im Arbeitsmodus. Das heißt, im Ruhemodus ist die Bildfrequenz geringer als im Arbeitsmodus.

In einer Draufsicht kann der Detektionsbereich zwei Schenkel aufweisen. Der Detektionsbereich muss in der Draufsicht nicht symmetrisch sein. Die zwei Schenkel führen insbesondere von dem optischen Sensorsystem weg. Die zwei Schenkel bilden insbesondere einen Winkel α von 30° ≤ α ≤ 110°. Hierbei kann es sein, dass die zwei Schenkel des Detektionsbereiches verlängert werden müssen, um den Winkel α zu bilden. Dieses kann z.B. auftreten, wenn der Detektionsbereich in der Draufsicht die Form eines Trapezes aufweist. Alternativ kann der Winkel bevorzugt im Bereich 30° ≤ α ≤ 90° ausgebildet sein, besonders bevorzugt im Bereich 30° ≤ α ≤ 60°. Dieser Winkelbereich ist insbesondere sinnvoll, wenn sich ein Benutzer nahezu orthogonal auf das Kraftfahrzeug zubewegen wird. Dieses ist insbesondere im Heckbereich der Fall. Durch die Wahl des kleinen Winkels wird vermieden, dass Benutzer, die nur an dem Kraftfahrzeug vorbei gehen, den Detektionsbereich beschreiten und damit den Start einer weitergehenden Prüfung, z. B. der Authentifizierungsüberprüfung, auslösen. Hierdurch kann eine elektrische Leistung eingespart werden.

Ebenfalls ist es denkbar, den Empfangsbereich so weiträumig zu gestalten, dass der Empfangsbereich den Sendebereich vollständig umfasst. Hierdurch werden alle vom Lichtmodul emittierte Lichtstrahlen vom optischen Sensor empfangen, so dass elektrische Leistung eingespart wird. Die Erfindung wird dadurch gekennzeichnet, dass das optische Sensorsystem zwischen einem Ruhemodus und einem Arbeitsmodus schaltbar ist. Hierbei kann das optische Sensorsystem im Ruhemodus eine geringe elektrische Leistung erfordern als im Arbeitsmodus.

Das von dem Lichtmodul emittierte Licht ist gepulst. Es ist vorgesehen, dass die Pulsfrequenz im Ruhemodus geringer ist als im Arbeitsmodus.

Schritt a) umfasst auch das Erkennen eines Benutzers. Generell kann ein einmaliges Erkennen eines beliebigen Objektes im Detektionsbereich ausreichen, um einen Benutzer zu erkennen und das Signal zum Start der Authentifizierungsüberprüfung auszulösen. Um zu erreichen, dass das Signal zum Start der Authentifizierungsüberprüfung nur selten ausgelöst wird und somit elektrische Leistung gespart wird, ist es möglich, besondere Anforderungen an die Erkennung eines Benutzers zum Detektionsbereich zu stellen.

So ist es denkbar, dass ein Benutzer im Detektionsbereich nur erkannt wird, wenn sich ein Objekt über eine vorgegebene Detektionsdauer d im Detektionsbereich aufhält. Schon durch die Wahl der Zeitspanne t können u. U. Objekte, die sich eine geringere Zeit als die Zeitspanne t im Detektionsbereich aufhalten, nicht detektiert werden.

Weiterhin ist es möglich, dass ein Benutzer im Detektionsbereich nur erkannt wird, wenn das Objekt sich im Detektionsbereich bewegt. Hierzu können beispielsweise die Pixel, die das Objekt abbilden, von mindestens zwei zeitlich hintereinander aufgenommenen Bildern, insbesondere Erkennungsbildern, verglichen werden. Zusätzlich oder alternativ kann beispielsweise ein Abstand des Objektes zum optischen Sensor bei mindestens zwei zeitlich hintereinander aufgenommenen Bildern, insbesondere Erkennungsbildern, gemessen werden. Werden unterschiedliche Abstände detektiert, so hat sich das Objekt in den Detektionsbereich bewegt. Um einen Abstand des Objektes zum optischen Sensor feststellen zu können, kann beispielsweise eine Time of Flight Messung durchgeführt werden. Hierbei werden z.B. ein oder mehrere Lichtpulse vom Lichtmodul ausgesandt und die Zeit, die der Lichtpuls zum Objekt und von dort zum optischen Sensor benötigt, gemessen. Die Zeit ist hierbei direkt proportional zum Abstand des Objektes.

Weiterhin ist es möglich, dass ein Benutzer im Detektionsbereich nur erkannt wird, wenn das Objekt sich in dem Detektionsbereich dem optischen Sensorsystem und/oder dem Kraftfahrzeug annähert. D. h., es ist nicht nur eine reine Bewegung des Objektes im Detektionsbereich ausreichend, um das Signal für den Start der Authentifizierungsüberprüfung auszulösen. Nur wenn sich der Abstand des Objektes zum optischen Sensor und/oder zum Kraftfahrzeug verringert, wird ein Signal für den Start der Authentifizierungsüberprüfung ausgelöst. Hierzu wird der Abstand des Objektes zum optischen Sensor bei mindestens zwei zeitlich hintereinander aufgenommenen Bildern, insbesondere Erkennungsbildern, gemessen.

Es ist denkbar, dass das optische Sensorsystem derart ausgebildet ist, dass der Detektionsbereich in mindestens zwei Zonen aufgeteilt ist, in eine Nahzone und in eine Femzone. Die Nahzone liegt in einem geringeren Abstand zum optischen Sensorsystem als die Femzone.

Es ist denkbar, dass ein Erkennen des Benutzers erst dann erfolgen kann, wenn der Benutzer sich in der Nahzone befindet.

Das optische Sensorsystem kann ferner ausgebildet sein,
c) nach erfolgreicher Authentifizierung einen außerhalb des Kraftfahrzeuges liegenden sich vom Detektionsbereich unterscheidenden Betätigungsbereich zu überwachen,
d) im Falle eines Erkennens eines Benutzerwillens im Betätigungsbereich ein Arbeitssignal für das Kraftfahrzeug bereitzustellen.

Das Arbeitssignal kann ein Signal zum Öffnen und/oder Schließen eines beweglichen Teils sein.

Vorzugsweise ist der Betätigungsbereich für den Benutzer sichtbar. Hierzu kann das Montagemodul ein Anzeigeelement aufweisen, durch das sichtbares Licht emittierbar ist, um den Betätigungsbereich für den Benutzer sichtbar zu machen.

Vorzugsweise wird der Benutzerwille durch eine vordefinierte Bewegung erkannt. Bei der vordefinierten Bewegung kann es sich um die Bewegung eines Körperteils des Benutzers im oder am Betätigungsbereich handeln. Bei der vordefinierten Bewegung kann es sich zusätzlich oder alternativ um die Bewegung eines Körperteils des Benutzers in dem Betätigungsbereich und/oder aus dem Betätigungsbereich handeln.

Vorzugsweise muss zur Erkennung des Benutzerwillens die vordefinierte Bewegung innerhalb einer Betätigungsdauer b erfolgen. Erfolgt die vordefinierte Bewegung nach der Betätigungsdauer b, so wird kein Arbeitssignal bereitgestellt.

Es kann vorgesehen sein, dass der Detektionsbereich in einer Draufsicht eine größere räumliche Ausdehnung als der Betätigungsbereich aufweist.

Vorzugsweise sind der optische Sensor und das Lichtmodul dazu ausgebildet, sowohl zur Überwachung des Detektionsbereichs als auch zum Überwachen des Betätigungsbereichs eingesetzt zu werden. Ebenfalls kann der optische Sensor zu der Überwachung des Detektionsbereiches denselben Empfangsbereich wie zu der Überwachung des Betätigungsbereiches aufweisen. Hierzu kann es sein, dass der optische Sensor und/oder das Lichtmodul ein starres Linsensystem aufweist. Durch diese Maßnahmen kann es sein, dass das optische Sensorsystem besonders kostengünstig hergestellt wird.

Die Erfindung umfasst auch ein Authentifizierungssystem mit einem ID-Geber, einem Zugangskontrollsystem und einem erfindungsgemäßen Montagemodul.

Die Aufgabe der Erfindung wird auch durch ein Verfahren nach Anspruch 22 gelöst. Weitere, die Erfindung verbessernde Maßnahmen ergeben sich aus der nachfolgenden Beschreibung zu den Ausführungsbeispielen der Erfindung, welche in den Figuren schematisch dargestellt sind. Es zeigen:
Fig. 1 eine Draufsicht auf einen Heckbereich eines Kraftfahrzeuges mit einem erfindungsgemäßen Montagemodul und einem erfindungsgemäßen Authentifizierungssystem,
Fig. 2 der Heckbereich aus Figur 1 in einer Seitenansicht,
Fig. 3 ein Seitenbereich eines Kraftfahrzeuges mit einem erfindungsgemäßen Montagemodul und einem erfindungsgemäßen Authentifizierungssystem in einer Seitenansicht,
Fig. 4 das Montagemodul aus Figur 3 in einer anderen Seitenansicht,
Fig. 5 eine Draufsicht auf ein erstes erfindungsgemäßes Montagemodul,
Fig. 6 eine Draufsicht auf ein zweites erfindungsgemäßes Montagemodul,
Fig. 7 ein drittes erfindungsgemäßes Montagemodul in einer Vorderansicht,
Fig. 8 eine Ansicht auf einen Bildsensor aus Figur 7, wobei dargestellt ist, wie eine Überwachungseinheit eines erfindungsgemäßen Montagemoduls den Bildsensor auswerten kann,
Fig. 9 eine weitere Ansicht des Bildsensors aus Figur 7, wobei dargestellt ist, auf welche weitere Weise die Überwachungseinheit den Bildsensor auswerten kann,
Fig. 10 eine Darstellung der Strahlungsintensität über der Zeit, die von einem erfindungsgemäßen Montagemodul emittiert wird, und
Fig. 11 ein erfindungsgemäßes Verfahren.

Elemente mit gleicher Funktion und Wirkungsweise sind in den Figuren mit denselben Bezugszeichen bezeichnet.

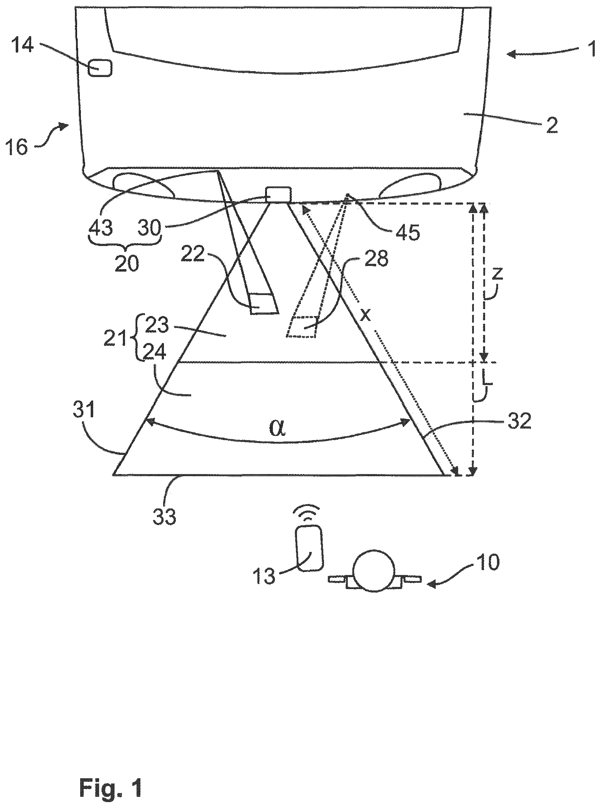

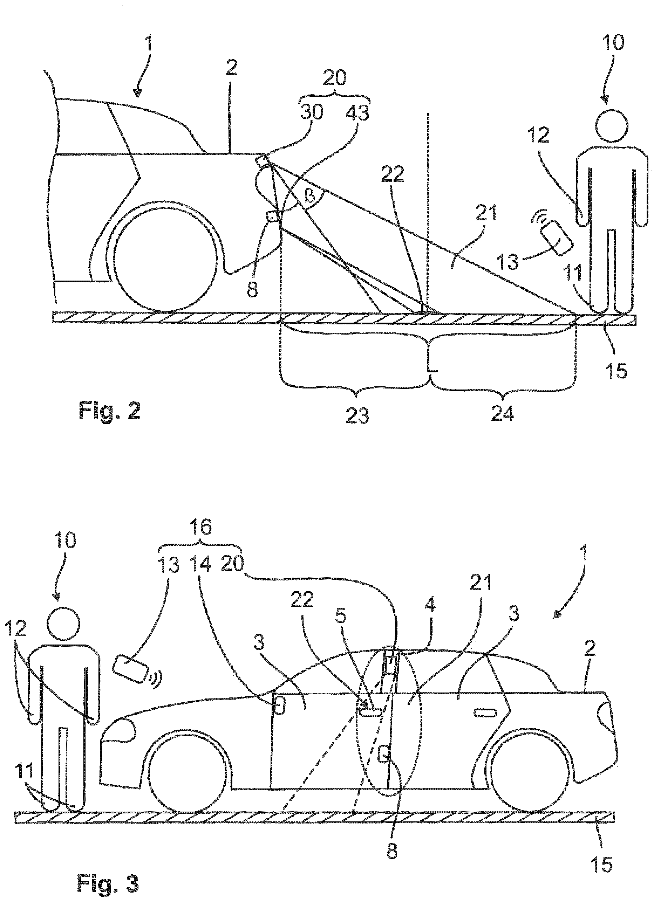

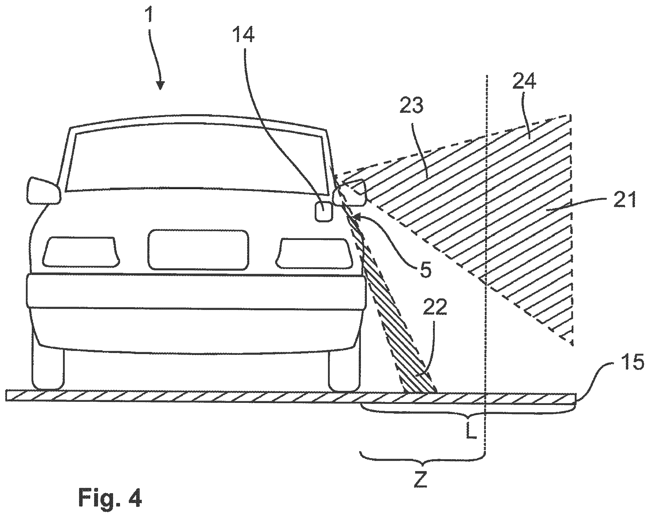

In den Figuren 1 und 2 einerseits und in den Figuren 3 und 4 andererseits ist jeweils dargestellt, wie ein erfindungsgemäßes Montagemodul 20 und ein erfindungsgemäßes Authentifizierungssystem 16 bei einem Kraftfahrzeug 1 eingesetzt werden. In den Figuren 1 und 2 ist hierbei der Einsatz in einem Heckbereich eines Kraftfahrzeuges 1 mit einer Heckklappe 2 dargestellt. Das optische Sensorsystem 30 des Montagemoduls 20 ist im Bereich der Heckklappe 2, z. B. in einer Griffleiste der Heckklappe 2, angeordnet. Durch das optische Sensorsystem 30 wird ein außerhalb des Kraftfahrzeuges 1 liegender Detektionsbereich 21 erzeugt. Das optische Sensorsystem 30 überwacht bei einem abgestellten Kraftfahrzeug 1 den Detektionsbereich 21 dauerhaft. Nähert sich ein Benutzer 10, der in den Figuren 1 und 2 noch außerhalb des Detektionsbereiches 21 dargestellt ist, mit einem ID-Geber 13 dem Kraftfahrzeug 1 und dem optischen Sensorsystem 30, so gelangt der Benutzer 10 in den Detektionsbereich 21. Wird der Benutzer 10 in dem Detektionsbereich 21 erkannt, so wird ein Signal zum Starten einer Authentifizierungsüberprüfung ausgelöst.

Dadurch, dass das optische Sensorsystem 30 erkennt, dass sich ein Benutzer 10 dem Kraftfahrzeug 1 nähert, und im Falle eines Erkennens des Benutzers 10 im Detektionsbereich 21 ein Signal für den Start einer Authentifizierungsüberprüfung ausgelöst wird, muss der Benutzer nicht aktiv werden, um die Authentifizierungsüberprüfung einzuleiten. Somit muss der Benutzer 10 den ID-Geber 13 nicht in einer Hand 12 halten, sondern es genügt, den ID-Geber 13 beispielsweise in einer Tasche bei sich zu führen. Somit handelt es sich um eine Passive-Keyless-Entry-Überprüfung.

Dadurch, dass ein optisches Sensorsystem 30 den Detektionsbereich 21 überwacht, kann zum einen gewährleistet werden, dass das Signal für den Start der Authentifizierungsüberprüfung ausgelöst wird, bevor der Benutzer 10 das Kraftfahrzeug 1 erreicht. Hierbei wird üblicherweise die Authentifizierungsüberprüfung abgeschlossen sein, bevor der Benutzer 10 näher als ein erster Betätigungsbereich 22 an das Kraftfahrzeug 1 herangekommen ist. Andererseits ist der Detektionsbereich 21 auf einen vorgegebenen Raumabschnitt beschränkt, der beispielsweise in einer Draufsicht nur wenige m² umfasst, sodass nur selten das Signal für den Start der Authentifizierungsüberprüfung ausgelöst wird. Hierdurch kann rechtzeitig und gezielt das Signal für den Start der Authentifizierungsüberprüfung ausgelöst werden.

In einer Draufsicht weist der Detektionsbereich 21 zwei Schenkel 31, 32 auf, die sich zum optischen Sensorsystem 30 hin annähern. Ebenfalls weist der Detektionsbereich 21 eine Basis 33 auf, die an der dem optischen Sensorsystem 30 abgewandten Seite des Detektionsbereiches 21 den Detektionsbereich 21 begrenzt. Der Detektionsbereich 21 endet an der Basis 33. Die Basis 33 ist gerade ausgebildet. Die beiden Schenkel 31, 32 bilden einen Winkel α. Durch den sich verjüngenden Detektionsbereich 21 in Richtung des Kraftfahrzeuges 1 kann die rechtzeitige und dennoch seltene Auslösung des Signals zum Start einer Authentifizierung besonders gut erreicht werden.

Der Winkel α beträgt in Figur 1 zwischen 30° und 60°. Hierdurch wird verhindert, dass ein Benutzer 10, der seitlich an dem Kraftfahrzeug 1 vorbeiläuft, in den Detektionsbereich 21 gelangt. Eine Länge L, die sich aus dem Abstand der Basis 33 zu dem optischen Sensorsystem 20 ergibt, beträgt 1,5 m. Durch die Länge L und den Winkel α ergibt sich auch x als maximale Entfernung eines Punktes des Detektionsbereichs 21 zum optischen Sensorsystem 30. Durch die gewählten Parameter ist der Detektionsbereich 21 begrenzt, so dass nur wenig elektrische Leistung zum Überwachen des Detektionsbereichs 21 benötigt wird. Wie in Figur 2 dargestellt endet der Detektionsbereich 21 auf einer Bodenfläche 15, auf der das Kraftfahrzeug 1 abgestellt ist. Hierdurch weist der Detektionsbereich 21 einen schrägen Kegelstumpf auf. Ein in Fig. 2 abgebildeter Winkel β entspricht einem Winkel des Detektionsbereichs 21 in einer Seitenansicht. Vorliegend ist der Winkel α ungleich dem Winkel β gewählt, so dass der Detektionsbereich elliptisch ausgebildet ist.

Eine weitere Möglichkeit, nur wenig elektrische Leistung zu benötigen, wird durch die Aufteilung des Detektionsbereichs 21 in eine Fernzone 24 und eine Nahzone 23 erreicht, wobei die Nahzone 23 einen geringeren Abstand zum Sensorsystem 30 als die Fernzone 24 aufweist. Gelangt der Benutzer 10 zunächst in die Fernzone 24, so stellt das optische Sensorsystem 30 fest, dass sich ein Objekt in der Fernzone 24 befindet. Ferner überprüft das optische Sensorsystem 30, ob das Objekt eine vorgegebene Größe aufweist. Weist das Objekt die vorgegebene Größe auf und begibt sich das Objekt in die Nahzone 23 der Detektionszone 21, so wird in der Nahzone 23 zusätzlich aus einer Messung des Abstands des Objektes zu einem optischen Sensor 50 geschlossen, ob sich das Objekt dem optischen Sensor 50 annähert. Wird dieses bejaht, so wird der Benutzer 10 erkannt und ein Signal für den Start einer Authentifizierungsüberprüfung zwischen dem ID-Geber 13 und einem Zugangskontrollsystem 14 des Kraftfahrzeuges 1 ausgelöst.

Durch das Signal wird das Zugangskontrollsystem 14 veranlasst, ein Wecksignal an den ID-Geber 13 zu senden. Anschließend übermittelt der ID-Geber 13 einen Authentifizierungscode an das Zugangskontrollsystem 14. Das Zugangskontrollsystem 14 vergleicht den Authentifizierungscode mit einem gespeicherten Code. Stimmen die beiden Codes überein, so ist die Authentifizierung erfolgreich und ein Entriegelungssignal wird ausgelöst. Hierbei kann es sich um ein Entriegelungssignal für alle Türen des Kraftfahrzeuges 1 handeln oder aber auch nur ein Entriegelungssignal für die Heccklappe 2.

In den Figuren 1 und 2 ist des Weiteren der erste Betätigungsbereich 22 dargestellt. Nach einer erfolgreichen Authentifizierung überwacht das optische Sensorsystem 30 den ersten Betätigungsbereich 22. Führt nun der Benutzer 10 eine vordefinierte Bewegung in dem ersten Betätigungsbereich 22 aus und tritt beispielsweise mit einem Fuß 11 für eine gewisse Zeitdauer und innerhalb einer vordefinierten Betätigungsdauer b in den ersten Betätigungsbereich 22, so wird ein Arbeitssignal ausgelöst. Bei dem Arbeitssignal handelt es sich zum Signal der Öffnung der Heckklappe 2. Hierbei kann es nur sein, dass ein Türschloss 8 der Heckklappe 2 entriegelt wird und durch den Druck einer Dichtung leicht aufspringt. Andererseits ist es denkbar, dass zugleich eine motorische Öffnungshilfe durch das Arbeitssignal aktiviert wird, so dass die Heckklappe 2 sich vollständig öffnet.

Der Betätigungsbereich 22 ist sichtbar auf der Bodenfläche 15 ausgebildet. Hierzu ist ein erstes Anzeigeelement 43 vorgesehen, dass den Betätigungsbereich 22 für den Benutzer 10 sichtbar macht. Hierzu kann das erste Anzeigeelement 43 sichtbares Licht emittieren. Das erste Anzeigeelement 43 wird nach der erfolgreichen Authentifizierung angesteuert. Der erste Betätigungsbereich 22 liegt in den Figuren 1 und 2 innerhalb der Nahzone 23 des Detektionsbereiches 21. Der Betätigungsbereich 22 ist von geringeren räumlichen Ausmaßen als der Detektionsbereich 21.

Es kann sein, dass der erste Betätigungsbereich 22 der einzige Betätigungsbereich ist. Optional und daher in Figur 1 gestrichelt dargestellt, ist zusätzlich ein zweiter Betätigungsbereich 28 dargestellt. In diesem Fall muss ein Benutzer 10 innerhalb einer vordefinierten Betätigungsdauer b eine vordefinierte Bewegung in beiden Betätigungsbereichen 22, 28 ausführen, um das Arbeitssignal bereitzustellen. Zum Sichtbarmachen des zweiten Betätigungsbereichs 28 dient ein zweites Anzeigeelement 45 des Montagemoduls 20.

In den Figuren 3 und 4 ist ein weiteres Ausführungsbeispiel dargestellt, wie das erfindungsgemäße Montagemodul 20 eingesetzt wird. Soweit im Folgenden nicht erläutert, entsprechen Wirkungsweise und Funktion des in Figur 3 und 4 dargestellten Montagemoduls 20 der Wirkungsweise und Funktion des in den Figuren 1 und 2 dargestellten Montagemoduls 20. Das Montagemodul 20 ist in den Figuren 3 und 4 in einer B-Säule 4 einer Fahrzeugseite angeordnet. Durch den Detektionsbereich 21 wird eine Annäherung an eine Seitentür 3 des Kraftfahrzeuges 1 überwacht. Das Arbeitssignal kann zum Öffnen der Seitentür 3 dienen. Die vordefinierte Bewegung zum Bereitstellen des Arbeitssignals kann eine vordefinierte Bewegung mit einer Hand 12 des Benutzers 10 im Bereich eines Türgriffs 5 sein.

Im Gegensatz zu dem Ausführungsbeispiel der Figuren 1 und 2, befindet sich in dem in den Figuren 3 und 4 dargestellten Ausführungsbeispiel der außerhalb des Kraftfahrzeuges 1 liegende Detektionsbereich 21 vollständig über der Bodenfläche 15. Der Detektionsbereich 21 weist eine ebene Grundfläche auf Der Betätigungsbereich 22 des Ausführungsbeispiels der Figuren 3 und 4 umfasst den Bereich des Türgriffes 5. Der einzige Betätigungsbereich 22 liegt außerhalb des Detektionsbereiches 21.

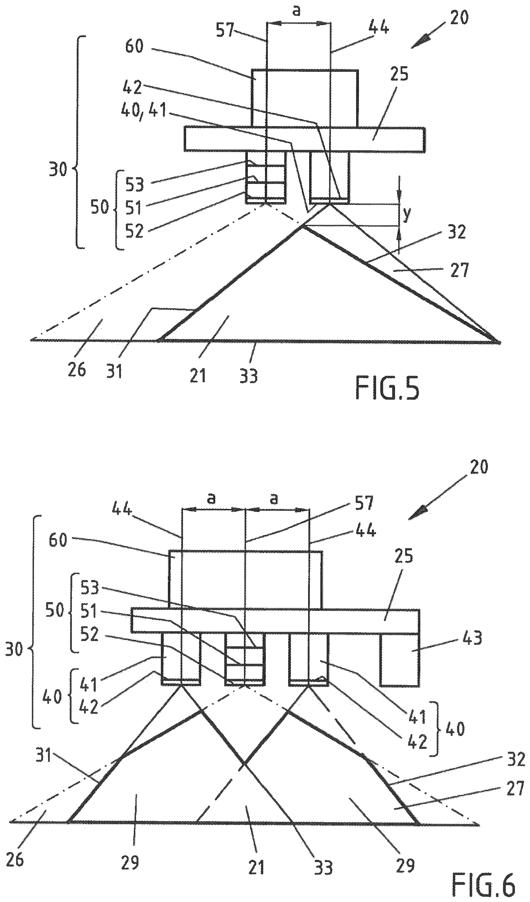

In der Figur 5 ist ein erstes Ausführungsbeispiel eines erfindungsgemäßen Montagemoduls 20 in einer Draufsicht dargestellt. Das Montagemodul 20 weist eine Installationsplatte 25 als ein Befestigungselement und ein optisches Sensorsystem 30 auf. Das optische Sensorsystem 30 weist ein Lichtmodul 40 auf, das in Figur 5 als eine einzige Lichtquelle 41 ausgebildet ist. Die Lichtquelle 41 emittiert Infrarotlicht, wodurch ein Sendebereich 27 entsteht. Form und Gestalt des Sendebereiches 27 wird durch ein Linsensystem 42 der Lichtquelle 41, das nur schematisch dargestellt ist, erreicht. Das optische Sensorsystem 30 weist zudem einen optischen Sensor 50 auf, der aus einem Empfangsbereich 26 Licht empfangen kann. Form und Gestalt des Empfangsbereiches 26 wird durch ein schematisch dargestelltes Linsensystem 51 des optischen Sensors 50 vorgegeben. Der mit dicker Strichdicke dargestellte Detektionsbereich 21 ergibt sich durch die Überlagerung des Sendebereiches 27 mit dem Detektionsbereich 26. Hierbei überdeckt der Detektionsbereich 26 den Sendebereich 27 vollständig. Der Detektionsbereich 21 beginnt mit einem Abstand y von dem optischen Sensorsystem 30. Eine Basis 33 des Detektionsbereiches 21 ergibt sich aus der nachlassenden Lichtintensität der Lichtquelle 41.

Der optische Sensor 50 weist einen Infrarotfilter 52 auf, um Licht anderer Wellenlängen zu filtern. Ferner weist der optische Sensor einen Bildsensor 53 auf, auf dem das Bild entsteht. Eine Überwachungseinheit 60 dient zur Auswertung des optischen Sensors 50. Der optische Sensor 50, das Lichtmodul 40 und die Überwachungseinheit 60 sind auf der Installationsplatte 25 befestigt.

Eine optische Achse 57 des optischen Sensors 50 und eine optische Achse 44 der Lichtquelle 41 sind in einem Abstand a = 2 cm voneinander entfernt angeordnet. Hierdurch ist eine große Überlagerung des Sendebereichs 27 mit dem Detektionsbereich 26 gegeben.

Das Montagemodul 20 der Figur 5 weist kein Anzeigenelement 43 auf. Das Montagemodul 20 der Figur 5 dient nur zur Überwachung des Detektionsbereichs und zum Auslösen eines Starts der Authentifizierungsüberprüfung.

Der Detektionsbereich 21 in Figur 5 ergibt sich aus der gesamten Überlagerung des Sende- und Empfangsbereichs 26, 27 und entspricht damit dem Ausführungsbeispiel der Figuren 1 und 2, bei der der Betätigungsbereich 22 sich innerhalb des Detektionsbereichs 21 befindet. Ebenfalls ist es denkbar, dass der Detektionsbereich 21 und der Betätigungsbereich jeweils nur einen Teil der Überlagerung des Sende- und Empfangsbereich 26, 27 umfasst, wie es dem Ausführungsbeispiel der Figuren 3 und 4 entspricht.

In Figur 6 ist ein zweites Ausführungsbeispiel eines erfindungsgemäßen Montagemoduls 20 dargestellt. Das zweite Ausführungsbeispiel entspricht, soweit nicht weiter ausgeführt, mit dem ersten Ausführungsbeispiel, wobei im Folgenden die Unterschiede erläutert werden.

Im zweiten Ausführungsbeispiel weist das Lichtmodul 40 zwei Lichtquellen 41 auf, die jeweils rechts und links von dem optischen Sensor 50 angeordnet sind. Jede der Lichtquellen 41 hat einen Sendebereich 29, wobei die Sendebereiche beider Lichtquellen 41 den Sendebereich 27 des Lichtmoduls 40 bilden. Der mit dicker Strichdicke dargestellte Detektionsbereich 21 ist durch eine Überlagerung des Sendebereiches 27 des gesamten Lichtmoduls 40 mit dem Empfangsbereich 26 des optischen Sensors 50 ausgebildet.

Das Montagemodul 20 weist ein Anzeigenelement 43 auf, um den Betätigungsbereich 22 sichtbar darzustellen. Das Anzeigenelement 43 ist auf der Installationsplatte 25 befestigt. Das optische Sensorsystem 30 des zweiten Ausführungsbeispiels ist geeignet, den Betätigungsbereich 22 zu überwachen und im Falle eines Erkennens eines Benutzerwillens ein Arbeitssignal bereitzustellen.

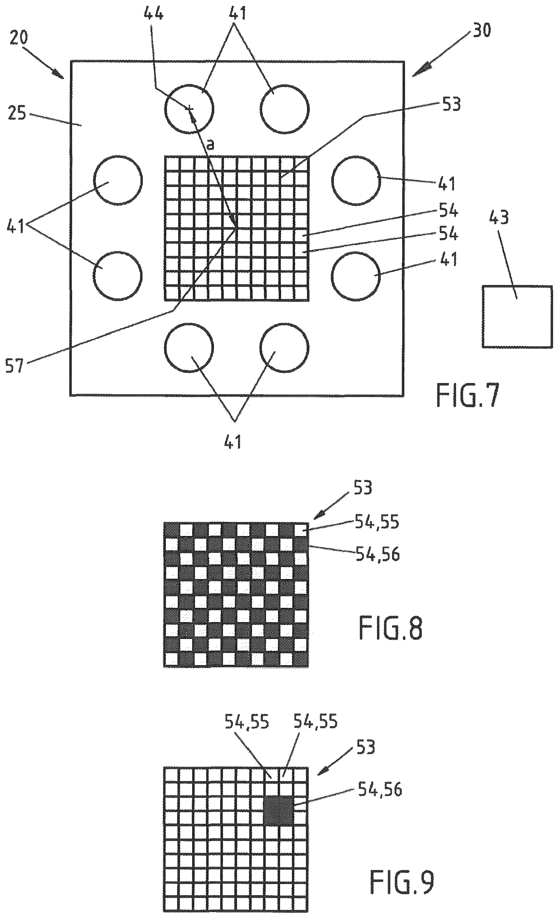

In Figur 7 ist ein drittes Ausführungsbeispiel eines erfindungsgemäßen Montagemoduls 20 in einer Vorderansicht dargestellt. Soweit im Folgenden nicht erläutert, entspricht das dritte Ausführungsbeispiel dem zweiten Ausführungsbeispiel.

In der in Figur 7 dargestellten Ansicht sind das Linsensystem 51 und der Infrarotfilter 52 aus der Ansicht entfernt worden. Hierdurch ist ein Bildsensor 53 des optischen Sensors 50 dargestellt. Der Bildsensor 53 weist eine Vielzahl von rasterförmigen Pixeln 54 auf.

Das Lichtmodul 40 des dritten Ausführungsbeispiels der Figur 7 weist eine Vielzahl von Lichtquellen 41 auf. Diese sind um den Umfang des Bildsensors 53 angeordnet. Das Montagemodul 20 weist des Weiteren ein Anzeigeelement 43 auf, das nicht auf der Installationsplatte 25 befestigt ist. Vielmehr kann das Anzeigeelement 43 an einer weiter entfernt liegenden Stelle des Kraftfahrzeuges 1 befestigt sein. Die nicht dargestellte Überwachungseinheit 60 ist zusammen mit dem Zugangskontrollsystem 14 ausgebildet.

In Figur 8 ist der Bildsensor 53 eines optischen Sensors 50 dargestellt, wobei veranschaulicht ist, wie ein in einem Ruhemodus auf dem Bildsensor 53 aufgenommenes Bild 61 des optischen Sensorsystems 30 ausgewertet wird. Wie dargestellt, wird hierbei nur jeder zweite Pixel 54 ausgewertet. Insbesondere wechseln sich nicht ausgewertete Pixel 55 und ausgewertete Pixel 56 ab, so dass sich ein karoartiges, regelmäßiges Muster bildet. In einem Arbeitsmodus hingegen wird die Gesamtzahl der Pixel 54 ausgewertet.

In Figur 9 ist der Bildsensor 53 dargestellt, wobei veranschaulicht ist, wie die aufgenommenen Bilder 61 ausgewertet werden, während das optische Sensorsystem 30 den Betätigungsbereich 22 überwacht. Nur die Pixel 54, auf denen der Betätigungsbereich 22 abgebildet ist, werden ausgewertet, sodass diese Pixel 54 den ausgewerteten Pixeln 56 entsprechen. Bei den übrigen Pixeln 54 handelt es sich um nicht ausgewertete Pixel 55.

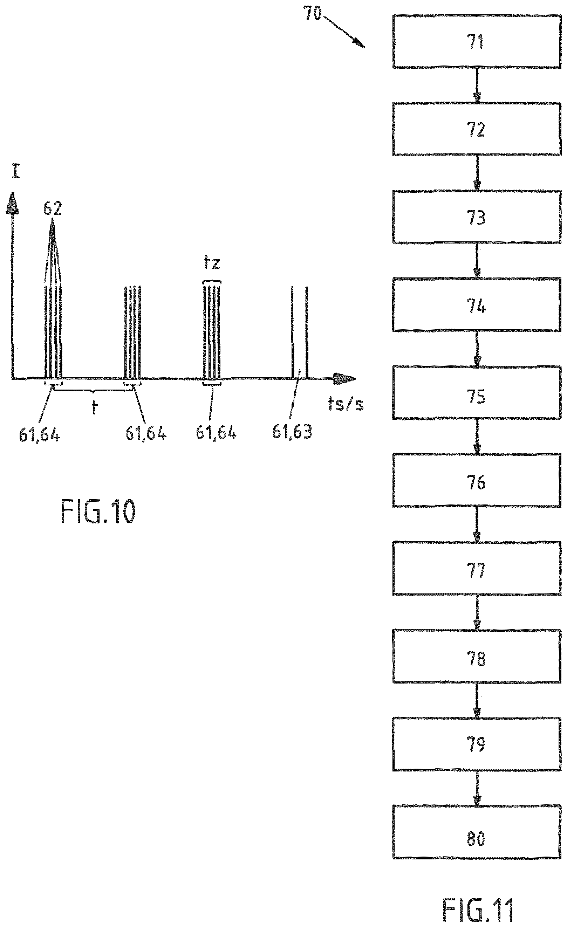

Figur 10 enthält eine Auftragung einer Lichtintensität l über der Zeit ts. Wie in Figur 10 dargestellt, wird mit Hilfe des Bildsensors 53 nach jeder Zeitspanne t ein Bild 61 aufgenommen, wobei in der Figur 10 jeweils die Zeitspanne dargestellt ist, die für ein Bild 61 benötigt wird. Hierbei kann es sich um ein Erkennungsbild 64 oder ein Vergleichsbild 63 handeln. Das Erkennungsbild 64 ist mit Hilfe von Lichtpulsen 62 des Lichtmoduls 40 aufgenommen worden. Hierbei ist eine Vielzahl von Lichtpulsen 62 notwendig, um ein Bild 61 zu erzeugen. Die Lichtpulse 62 werden mit einer vorgegebenen Pulsfrequenz von dem Lichtmodul 40 emittiert. Hierbei ist die Pulsfrequenz während des Ruhemodus geringer als die des Arbeitsmodus. Ebenso ist die Bildfrequenz, die sich durch die Zeitspanne t ergibt, in einem Ruhemodus geringer als in einem Arbeitsmodus.

Das von dem Bildsensor 53 empfangene Licht der Lichtpulse 62 eines Bildes 61 wird aufintegriert oder aufsummiert, um das Bild 61 zu erzeugen. Um eine Abstandsmessung durchzuführen, gibt das optische Sensorsystem 30 ein Zeitintervall tz vor, in dem die Lichtpulse 62 ein Bild 61 erzeugen. Der Abstand des Benutzers 10 zum optischen Sensor 50 wird in Abhängigkeit von der Intensität der Lichtpulse 62 im Zeitintervall tz bestimmt. In dem Vergleichsbild 63 wird ein Bild 61 aufgenommen, ohne dass Lichtpulse 62 des Lichtmoduls 40 den Bildsensor 53 erreichen. Hierzu emittiert das Lichtmodul 40 kein Licht.

Figur 11 zeigt ein erfindungsgemäßes Verfahren 70. In einem ersten Schritt 71 des erfindungsgemäßen Verfahrens 70 beginnt das optische Sensorsystem 30 den Detektionsbereich 21 zu überwachen. In einem zweiten Verfahrensschritt 72 entdeckt das optische Sensorsystem 20 ein Objekt, insbesondere einen Benutzer 10, in der Fernzone 24. Das optische Sensorsystem 30 überprüft in einem Verfahrensschritt 73 die Größe des Objektes in der Fernzone 24.

Hat sich das Objekt in die Nahzone 23 bewegt und hat der Verfahrensschritt 73 ergeben, dass die Größe des Objektes einer vorgegebenen Größe entspricht, so werden in Verfahrensschritt 74 anhand mehrerer Abstandsmessungen in der Nahzone 23 überprüft, ob sich der Abstand des Objekts zu dem optischen Sensor 50 verringert. Verringert sich der Abstand zum optischen Sensor 50, so wird die Überwachung des Detektionsbereichs 21 beendet und im Verfahrensschritt 75 ein Signal für den Start einer Authentifizierungsüberprüfung ausgelöst.

Nach dem Verfahrensschritt 75 kann das erfindungsgemäße Verfahren enden. Hierbei entsprechen die Verfahrensschritt 71 bis 74 dem Schritt a) und der Verfahrensschritt 75 dem Schritt b). Optional können weitere Verfahrensschritte vorgesehen sein. So kann in einem Verfahrensschritt 76 eine zuvor beschriebene Authentifizierungsüberprüfung durchgeführt werden.

Nach einer erfolgreichen Authentifizierung kann das optische Sensorsystem 30 in einem Verfahrensschritt 77 ein Signal erhalten, den Betätigungsbereich 22 während einer Betätigungsdauer b in einem Verfahrensschritt 78 zu überwachen. Wird während der Betätigungsdauer b eine vordefinierte Bewegung durchgeführt, so kann in einem Verfahrensschritt 79 der Benutzerwille im Betätigungsbereich 22 erkannt werden. Hierzu werden Abstandsmessungen im Betätigungsbereich 22 durchgeführt. In einem Verfahrensschritt 80, der dem Verfahrensschritt d) entspricht, wird hiernach ein Arbeitssignal zum Öffnen eines beweglichen Teils 2, 3 bereitgestellt. Hierbei entsprechen die Verfahrensschritte 78 und 79 dem Schritt c).

### Bezugszeichenliste

- 1: Kraftfahrzeug
- 2: Heckklappe (bewegliches Teil)
- 3: Seitentür (bewegliches Teil)
- 4: B-Säule
- 5: Türgriff
- 8: Türschloss

- 10: Benutzer
- 11: Fuß
- 12: Hand
- 13: ID-Geber
- 14: Zugangskontrollsystem
- 15: Bodenfläche
- 16: Authentifizierungssystem

- 20: Montagemodul
- 21: Detektionsbereich
- 22: erster Betätigungsbereich
- 23: Nahzone
- 24: Fernzone
- 25: Befestigungselement
- 26: Empfangsbereich
- 27: Sendebereich von 40
- 28: zweiter Betätigungsbereich
- 29: Sendebereich von 41

- 30: Optisches Sensorsystem
- 31: Schenkel
- 32: Schenkel
- 33: Basis
- 40: Lichtmodul
- 41: Lichtquelle von 30
- 42: Linsensystem für 30
- 43: erstes Anzeigeelement
- 44: optische Achse von 41
- 45: zweites Anzeigeelement

- 50: optischer Sensor
- 51: Linsensystem von 50
- 52: IR-Filter
- 53: Bildsensor
- 54: Pixel
- 55: nicht ausgewertete Pixel
- 56: ausgewertete Pixel
- 57: optische Achse von 50

- 60: Überwachungseinheit
- 61: Bild
- 62: Lichtpuls
- 63: Vergleichsbild
- 64: Erkennungsbild

- 70: Verfahren
- 71: Verfahrensschritt
- 72: Verfahrensschritt
- 73: Verfahrensschritt
- 74: Verfahrensschritt
- 75: Verfahrensschritt
- 76: Verfahrensschritt
- 77: Verfahrensschritt
- 78: Verfahrensschritt
- 79: Verfahrensschritt
- 80: Verfahrensschritt
- α: Winkel von 21
- β: Winkel von 21
- L: Länge von 21
- x: max. Entfernung von 21 zu 30
- y: minimaler Abstand von 21 zu 30
- a: Abstand von 44 zu 57

## Patentansprüche

1. Montagemodul (20) für ein Kraftfahrzeug, mit einem optischen Sensorsystem (30), das ausgebildet ist,
a) einen außerhalb des Kraftfahrzeugs (1) liegenden Detektionsbereich (21) zu überwachen, um eine Nähe eines Benutzers (10) festzustellen,
b) im Falle eines Erkennens des Benutzers (10) im Detektionsbereich (21) ein Signal für den Start einer Authentifizierungsüberprüfung zwischen einem ID-Geber (13) und einem Zugangskontrollsystem (14) des Kraftfahrzeuges (1) auszulösen,
**dadurch gekennzeichnet, dass**
das optische Sensorsystem (30) zwischen einem Ruhemodus und einem Arbeitsmodus schaltbar ist, wobei eine Bildfrequenz im Ruhemodus geringer ist als im Arbeitsmodus, wobei
das optische Sensorsvstem (30) dazu ausgebildet ist, den Detektionsbereich (21) dauerhaft bei einem abgestellten Kraftfahrzeug (1) bis zu einer erfolgreichen Authentifizierung zu überwachen, und hierbei nach jeder vorgegebenen Zeitspanne t ein Bild aufzunehmen und/oder auszuwerten, wobei im Ruhemodus die Zeitspanne t größer gewählt ist als im Arbeitsmodus, wobei
das vom Lichtmodul (40) emittierte Licht gepulst ist, wobei die Pulsfrequenz im Ruhemodus geringer ist als im Arbeitsmodus.

2. Montagemodul (20) nach Anspruch 1,
**dadurch gekennzeichnet,**
**dass** das optische Sensorsystem (30) eine Passive-Keyless-Entry-Überprüfung einleitet.

3. Montagemodul (20) nach Anspruch 1 oder 2,
**dadurch gekennzeichnet,**
**dass** das Montagemodul (20) dazu ausgebildet ist, so eingebaut zu werden, dass sich der Detektionsbereich (21) zumindest teilweise oberhalb einer Bodenfläche (15), auf der das Kraftfahrzeug (1) steht, befindet.

4. Montagemodul (20) nach einem der vorhergehenden Ansprüche,
**dadurch gekennzeichnet,**
**dass** das optische Sensorsystem (30) einen optischen Sensor (50) aufweist, um Licht aus dem Detektionsbereich (21) zu empfangen, und das optische Sensorsystem (30) ein Lichtmodul (40) mit mindestens einer Lichtquelle (41) zum Emittieren von Licht aufweist, wobei insbesondere der Detektionsbereich (21) für den Benutzer (10) nicht sichtbar ist.

5. Montagemodul (20) nach einem der vorhergehenden Ansprüchen,
**dadurch gekennzeichnet,**
**dass** der Detektionsbereich (21) durch die Überlagerung eines Sendebereichs (27) des Lichtmoduls (40) mit einem Empfangsbereich (26) des optischen Sensors (50) gebildet ist.

6. Montagemodul (20) nach einem der vorhergehenden Ansprüche,
**dadurch gekennzeichnet,**
**dass** das optische Sensorsystem (30) eine Überwachungseinheit (60) aufweist, die dazu ausgebildet ist, Bilder (61) auszuwerten, die vom optischen Sensor (50) aufgenommen worden sind.

7. Montagemodul (20) nach einem der vorhergehenden Ansprüche,
**dadurch gekennzeichnet,**
**dass** das optische Sensorsystem (30) dazu ausgebildet ist, Erkennungsbilder (64), die mit Hilfe des reflektierten Lichts des Lichtmoduls (40) entstanden sind, und Vergleichsbilder (63), die ohne das reflektierte Licht des Lichtmoduls (40) mit Hilfe von Störlicht entstanden sind, aufzunehmen und so auszuwerten, dass ein modifiziertes Erkennungsbild generiert wird, aus dem das Störlicht entfernt ist.

8. Montagemodul (20) nach einem der vorhergehenden Ansprüche,
**dadurch gekennzeichnet,**
**dass** in einer Draufsicht der Detektionsbereich (21) zwei Schenkel (31, 32) aufweist, die einen Winkel α von 30° ≤ α ≤ 110°, bevorzugt 30° ≤ α ≤ 90°, besonders bevorzugt 30° ≤ α ≤ 60° bilden.

9. Montagemodul (20) nach einem der vorhergehenden Ansprüche,
**dadurch gekennzeichnet,**
**dass** im Schritt a) während der Überwachung des Detektionsbereichs (21), insbesondere während des Ruhemodus, nur ein Teil des vom optischen Sensor (50) aufgenommenen Bildes (61) ausgewertet wird.

10. Montagemodul (20) nach einem der vorhergehenden Ansprüche,
**dadurch gekennzeichnet,**
**dass** ein Benutzer (10) im Detektionsbereich (21) nur erkannt wird, wenn sich ein Objekt über eine vorgegebene Zeitdauer im Detektionsbereich (21) aufhält und/oder wenn sich ein Objekt einer vorgegebenen Größe im Detektionsbereich (21) aufhält.

11. Montagemodul (20) nach einem der vorhergehenden Ansprüche,
**dadurch gekennzeichnet,**
**dass** ein Benutzer (10) im Detektionsbereich (21) nur erkannt wird, wenn sich das Objekt im Detektionsbereich (21) bewegt, insbesondere dass sich das Objekt im Detektionsbereich (21) dem optischen Sensor (50) annähert.

12. Montagemodul (20) nach einem der vorhergehenden Ansprüche,
**dadurch gekennzeichnet,**
**dass** der Detektionsbereich (21) in mindestens zwei Zonen (23, 24) aufgeteilt ist, in eine Nahzone (23) und in eine Fernzone (24), wobei die Nahzone (23) in einem geringeren Abstand zum optischen Sensorsystem (30) liegt als die Fernzone (24), wobei insbesondere sich das optische Sensorsystem (30) in dem Ruhemodus befindet, wenn sich ein Objekt in der Fernzone (24) aufhält, und in dem Arbeitsmodus befindet, wenn sich ein Objekt in der Nahzone (23) befindet.

13. Montagemodul (20) nach einem der vorhergehenden Ansprüche,
**dadurch gekennzeichnet,**
**dass** ein Erkennen des Benutzers (10) erst dann erfolgt, wenn der Benutzer (10) sich in der Nahzone (23) befindet.

14. Montagemodul (20) nach einem der vorhergehenden Ansprüche,
**dadurch gekennzeichnet,**
**dass** das Lichtmodul (40) mehrere Lichtquellen (41) aufweist.

15. Montagemodul (20) nach einem der vorhergehenden Ansprüche,
**dadurch gekennzeichnet,**
**dass** das optische Sensorsystem (30) ausgebildet ist,
c) nach erfolgreicher Authentifizierung einen außerhalb des Kraftfahrzeuges (1) liegenden, sich vom Detektionsbereich (21) unterscheidenden Betätigungsbereich (22) zu überwachen,
d) im Falle eines Erkennens eines Benutzerwillen im Betätigungsbereich (22) ein Arbeitssignal für das Kraftfahrzeug (1), insbesondere ein Signal zum Öffnen und/oder Schließen eines beweglichen Teils (2,3), bereitzustellen.

16. Montagemodul (20) nach einem der vorhergehenden Ansprüche,
**dadurch gekennzeichnet,**
**dass** der Betätigungsbereich (22) für den Benutzer (10) sichtbar ist, wobei das Montagemodul ein Anzeigeelement (43) aufweist, durch das sichtbares Licht emittierbar ist, um den Betätigungsbereich (22) für den Benutzer (10) sichtbar zu machen.

17. Montagemodul (20) nach Anspruch 15, **dadurch gekennzeichnet,**
**dass** zur Erkennung des Benutzerwillens eine vordefinierte Bewegung innerhalb einer Betätigungsdauer b erfolgen muss, wobei insbesondere es sich bei der vordefinierten Bewegung um eine Bewegung
eines Körperteils (11,12) des Benutzers (10) im oder am Betätigungsbereich (22) und/oder eine Bewegung des Körperteils (11, 12) in den Betätigungsbereich und/oder aus dem Betätigungsbereich handelt.

18. Montagemodul (20) nach einem der vorhergehenden Ansprüche,
**dadurch gekennzeichnet,**
**dass** in einer Draufsicht der Detektionsbereich (21) eine größere räumliche Ausdehnung als der Betätigungsbereich (22) aufweist, wobei insbesondere in einer Draufsicht sich der Betätigungsbereich (22) innerhalb des Detektionsbereichs (21) befindet.

19. Montagemodul (20) nach einem der vorhergehenden Ansprüche,
**dadurch gekennzeichnet,**
**dass** der optische Sensor (50) und/oder das Lichtmodul (40) dazu ausgebildet sind, sowohl zur Überwachung des Detektionsbereichs (21) als auch zum Überwachen des Betätigungsbereichs (22) eingesetzt zu werden.

20. Montagemodul (20) nach einem der vorhergehenden Ansprüche,
**dadurch gekennzeichnet,**
**dass** der optische Sensor (50) und/oder das Lichtmodul (40) ein starres Linsensystem (42, 51) aufweisen.

21. Authentifizierungssystem (16) mit einem Zugangskontrollsystem (14), einem ID-Geber (13) und einem Montagemodul (20) nach einem der vorhergehenden Ansprüche.

22. Verfahren (70) zum Auslösen mindestens eines Signals für ein Kraftfahrzeug (1) mit folgenden Schritten:
c) Überwachung einen außerhalb des Kraftfahrzeugs (1) liegenden Detektionsbereich (21) durch ein optisches Sensorsystem (30), um eine Nähe eines Benutzers (10) festzustellen,
d) Auslösen eines Signals für den Start einer Authentifizierungsüberprüfung zwischen einem ID-Geber (13) und einem Zugangskontrollsystem (14) des Kraftfahrzeuges (1) im Falle eines Erkennens des Benutzers (10) im Detektionsbereich (21),
**dadurch gekennzeichnet, dass**
das optische Sensorsystem (30) zwischen einem Ruhemodus und einem Arbeitsmodus schaltbar ist, wobei eine Bildfrequenz im Ruhemodus geringer ist als im Arbeitsmodus, wobei
das optische Sensorsystem (30) dazu ausgebildet ist, den Detektionsbereich (21) dauerhaft bei einem abgestellten Kraftfahrzeug (1) bis zu einer erfolgreichen Authentifizierung zu überwachen, und hierbei nach jeder vorgegebenen Zeitspanne t ein Bild aufzunehmen und/oder auszuwerten, wobei im Ruhemodus die Zeitspanne t größer gewählt ist als im Arbeitsmodus, wobei das vom Lichtmodul (40) emittierte Licht gepulst ist, wobei die Pulsfrequenz im Ruhemodus geringer ist als im Arbeitsmodus, wobei das Verfahren mit einem Montagemodul nach einem der Ansprüche 1 bis 20 ausführbar ist.

## Claims

1. An installation module (20) for a motor vehicle, with
an optical sensor system (30) which is designed
a) to monitor a detection area (21) outside of the motor vehicle (1) to detect a proximity of a user (10),
b) to trigger a signal for starting an authentication check between an ID transponder (13) and an access control system (14) of the motor vehicle (1) in the event that a user (10) is recognised in the detection area (21), **characterized in that**
the optical sensor system (30) can be switched between an idle mode and a work mode, wherein a frame rate in idle mode is lower than in work mode, wherein
the optical sensor system (30) is designed to monitor the detection area (21) in a parked motor vehicle (1) from the time the motor vehicle (1) is parked until successful authentication, and to take and/or evaluate an image after each predetermined period of time t, whereby the period of time t is selected to be longer in the idle mode than in the work mode, wherein
the light emitted by the light module (40) is pulsed, wherein in particular the pulse frequency is lower in the idle mode than in the working mode.

2. The installation module (20) according to claim 1,
**characterized in that**
the optical sensor system (30) initiates a passive keyless entry check.

3. The installation module (20) according to claim 1 or 2,
**characterized in that**
the installation module (20) is designed to be installed in such a manner that at least part of the detection area (21) is above a ground surface (15) on which the motor vehicle (1) is standing.

4. The installation module (20) according to any one of the preceding claims,
**characterized in that**
the optical sensor system (30) includes a sensor (50) for receiving light from the detection area (21), and the optical sensor system (30) includes a light module (40) with at least one light source (41) for emitting light, wherein in particular the detection area (21) is not visible to the user (10).

5. The installation module (20) according to any one of the preceding claims,
**characterized in that**
the detection area (21) is formed by overlapping a transmission area (27) of the light module (40) with a receiving area (26) of the optical sensor (50).

6. The installation module (20) according to any one of the preceding claims,
**characterized in that**
the optical sensor system (30) includes a monitoring unit (60) which is designed to evaluate images (61) that have been captured by the optical sensor (50).

7. The installation module (20) according to any one of the preceding claims,
**characterized in that**
the optical sensor system (30) is designed to capture identification images (64) which are created with the aid of the reflected light of the light module (40), and comparison images (63) which are created with the aid of stray light, without the reflected light of the light module (40), and to evaluate them in such manner that a modified identification image is generated from which the stray light has been removed.

8. The installation module (20) according to any one of the preceding claims,
**characterized in that**
in a top view the detection area (21) has two legs (31, 32) which form an angle α of 30°≤ α ≤ 110°, preferably 30° ≤ α ≤ 90°, particularly preferably 30° ≤ α ≤ 60°.

9. The installation module (20) according to any one of the preceding claims,
**characterized in that**
in step a) during monitoring the detection area (21), particularly during the idle mode, only a part of the image (61) captured by the optical sensor (50) is evaluated.

10. The installation module (20) according to any one of the preceding claims,
**characterized in that**
a user (10) in the detection area (21) is only identified if an object remains in the detection area (21) for a predetermined period of time and/or if an object of a predetermined size remains in the detection area (21).

11. The installation module (20) according to any one of the preceding claims,
**characterized in that**
a user (10) in the detection area (21) is only identified if the object moves in the detection area (21), particularly if the object in the detection area (21) moves towards the optical sensor (50).

12. The installation module (20) according to any one of the preceding claims,
**characterized in that**
the detection area (21) is divided into at least two zones (23, 24), a near zone (23) and a far zone (24), wherein the near zone (23) is located at a smaller distance from the optical sensor system (30) than the far zone (24), wherein the optical sensor system (30) in particular is in the idle mode when an object is located in the far zone (24) and is in the working mode when an object 'is located in the near zone (23).

13. The installation module (20) according to any one of the preceding claims,
**characterized in that**
identification of the user (10) only takes place when the user (10) is located in the near zone (23).

14. The installation module (20) according to any one of the preceding claims,
**characterized in that**
the light module (40) includes a plurality of light sources (41).

15. The installation module (20) according to any one of the preceding claims,
**characterized in that**
the optical sensor system (30) is designed to
c) monitor an actuation area (22) outside the motor vehicle (1) which differs from the detection area (21) after successful authentication,
d) provide a work signal for the motor vehicle (1), particularly a signal for opening and/or closing a moving part (2, 3) in the event that a user intention is detected in the actuating area (22).

16. The installation module (20) according to any one of the preceding claims,
**characterized in that**
the actuating area (22) is visible to the user (10), wherein the installation module includes a display element (43) by which visible light is emitted to make the actuating area (22) visible to the user (10).

17. The installation module (20) according to claim 15,
**characterized in that**
a predefined movement must be performed within an actuation period b in order for the user' s intention to be recognised, wherein in particular the predefined movement is a movement of a body part (11, 12 ) of the user (10) in or on the actuation area (22) and/or a movement of the body part (11, 12) into the actuation area and/or out of the actuation area.

18. The installation module ( 2 0 ) according to any one of the preceding claims,
**characterized in that**
in a top view the detection area (21) has a larger spatial extension than the actuation area (22) , wherein in particular in a top view the actuation area (22) is located within the detection area (21).

19. The installation module ( 2 0 ) according to any one of the preceding claims,
**characterized in that**
the optical sensor (50) and/or the light module (40) are designed such that both can be used to monitor the detection area ( 21) and to monitor the actuation area (22).

20. The installation module (20) according to any one of the preceding claims,
**characterized in that**
the optical sensor (50) and/or the light module (40) have a rigid lens system (42, 51).

21. An authentication system (16) having an access control system (14), an ID transponder (13) and an installation module (20) according to any one of the preceding claims.

22. A method (70) for triggering at least one signal for a motor vehicle (1) with the following steps:
c) monitoring a detection area (21) outside the motor vehicle (1) by means, of an optical sensor system (30) to detect a proximity of a user (10),
d) triggering a signal for starting an authentication check between an ID transponder (13) and an access control system (14) of the motor vehicle (1) in the event that a user (10) is recognised in the detection area (21),
**characterized in that**
the optical sensor system (30) can be switched between an idle mode and a work mode, wherein a frame rate in idle mode is lower than in work mode, wherein
the optical sensor system (30) is designed to monitor the detection area (21) in a parked motor vehicle (1) from the time the motor vehicle (1) is parked until successful authentication, and to take and/or evaluate an image after each predetermined period of time t, whereby the period of time t is selected to be longer in the idle mode than in the work mode, wherein
the light emitted by the light module (40) is pulsed, wherein in particular the pulse frequency is lower in the idle mode than in the working mode,
wherein the method can be carried out by an installation module according to any one of claims 1 to 20.

## Revendications

1. Module de montage (20) pour un véhicule automobile, avec
un système de détection optique (30), qui est constitué,
a) pour surveiller une zone de détection (21) située en dehors du véhicule automobile (1) pour constater une proximité d'un utilisateur (10),
b) pour déclencher en cas d'identification de l'utilisateur (10) dans la zone de détection (21), un signal pour la mise en marche d'un contrôle d'authentification entre un émetteur d'identifiant (ID) (13) et un système de contrôle d'accès (14) du véhicule automobile (1),
**caractérisé en ce que**
le système de détection optique (30) peut être connecté entre un mode de repos et un mode de fonctionnement, une fréquence d' image en mode de repos étant plus faible qu'en mode de fonctionnement, à condition que
le système de détection optique (30) est constitué pour surveiller la zone de détection (21) près d'un véhicule automobile arrêté (1) depuis l'arrêt du véhicule automobile (1) jusqu'à une authentification réussie, et, ce faisant, de prendre et/ou d'évaluer une image après chaque intervalle de temps t prédéfini, l'intervalle de temps t étant choisi plus grand en mode de repos qu'en mode de fonctionnement, à condition que
la lumière émise par le module lumineux (40) est puisée, la fréquence de pulsion étant notamment en mode de repos plus faible qu'en mode de fonctionnement.

2. Module de montage (20) selon la revendication 1,
**caractérisé en ce que**
le système de détection optique (30) initie un contrôle passif d'entrée sans clé.

3. Module de montage (20) selon la revendication 1 ou 2,
**caractérisé en ce que**
le module de montage (20) est constitué pour être incorporé de telle manière que la zone de détection (21) se trouve au moins en partie au- dessus d'une surface du sol (15) sur laquelle est le véhicule automobile (1).

4. Module de montage (20) selon l'une quelconque des revendications précédentes,
**caractérisé en ce que**
le système de détection optique (30) comporte un capteur optique (50) pour recevoir de la lumière d'une zone de détection (21) et le système de détection optique (30) comporte un module lumineux (40) avec au moins une source lumineuse (41) pour émettre de la lumière, la zone de détection (21) en particulier n'étant pas visible pour l'utilisateur (10).

5. Module de montage (20) selon l'une quelconque des revendications precedentes,
**caractérisé en ce que**
la zone de détection (21) est formée par la superposition d'une zone d'émission (27) du module lumineux (40) avec une zone de réception (26) du capteur optique (50).

6. Module de montage (20) selon l'une quelconque des revendications précédentes,
**caractérisé en ce que**
le système de détection optique (30) comporte une unité de surveillance (60) qui est constituée pour exploiter des images (61) qui ont été enregistrées par le capteur optique (50).

7. Module de montage (20) selon l'une quelconque des revendications précédentes,
**caractérisé en ce que**
le système de détection optique (30) est constitué pour enregistrer et exploiter des images d' identification (64) qui sont générées à l'aide de la lumière réfléchissante du module lumineux (40), et des images de comparaison (63) qui sont générées sans la lumière réfléchissante du module lumineux (40) à l'aide de lumière parasite de telle sorte qu'une image d'identification modifiée est générée de laquelle la lumière parasi te est enlevée.

8. Module de montage (20) selon l'une quelconque des revendications précédentes,
**caractérisé en ce que**
dans une vue de dessus la zone de détection (21) comporte deux branches (31, 32) qui forment un angle α de 30°≤ α ≤ 110°, de préférence 30° ≤ α ≤ 90°, de préférence notamment 30° ≤ α ≤ 60°.

9. Module de montage (20) selon l'une quelconque des revendications précédentes,
**caractérisé en ce que**
dans l'étape a) pendant la surveillance de la zone de détection (21) , notamment pendant le mode de repos, seule une partie de l'image (61) enregistrée par le capteur optique (50) est exploitée.

10. Module de montage (20) selon l'une quelconque des revendications précédentes,
**caractérisé en ce**
**qu'**un utilisateur (10) dans la zone de détection (21) n'est identifié que si un objet se tient sur une durée de temps prédéfinie dans la zone de détection (21) et/ou si un objet d'une taille prédéfinie se tient dans la zone de détection (21).

11. Module de montage (20) selon l'une quelconque des revendications précédentes,
**caractérisé en ce**
**qu'**un utilisateur (10) dans la zone de détection (21) n'est identifié que si l'objet se déplace dans la zone de détection (21), notamment **en ce que** l'objet s'approche du capteur optique (50) dans la zone de détection (21).

12. Module de montage (20) selon l'une quelconque des revendications précédentes,
**caractérisé en ce que**
la zone de détection (21) est divisée en au moins deux zones (23, 24), en une zone de proximité (23) et une zone d'éloignement (24), la zone de proximité (23) se trouve à une distance plus faible du système de détection optique (30) que la zone d'éloignement (24), le système de détection optique (30) se trouvant notamment dans le mode de repos, si un objet se tient dans la zone d'éloignement (24) et se trouve dans le mode de fonctionnement, si un objet se trouve dans la zone de proximité (23).

13. Module de montage (20) selon l'une quelconque des revendications précédentes,
**caractérisé en ce**
**qu'**une identification de l'utilisateur (10) n'a lieu ensuite que si l'utilisateur (10) se trouve dans la zone de proximité (23).

14. Module de montage (20) selon l'une quelconque des revendications précédentes,
**caractérisé en ce que**
le module lumineux (40) comporte plusieurs sources lumineuses (41).

15. Module de montage (20) selon l'une quelconque des revendications précédentes,
**caractérisé en ce que**
le système de détection optique (30) est constitué,
c) pour surveiller après authentification réussie une zone d'actionnement (22) se trouvant en dehors du véhicule automobile (1), se différenciant de la zone de détection (21),
d) pour fournir en cas d'une identification d'une volonté d'utilisateur dans la zone d'actionnement (22)' un signal de fonctionnement pour le véhicule automobile (1), notamment un signal pour ouvrir et/ou fermer une partie mobile (2, 3).

16. Module de montage (20) selon l'une quelconque des revendications précédentes,
**caractérisé en ce que**
la zone d'actionnement (22) est visible pour l'utilisateur (10), le module de montage comportant un élément d'affichage (43) à travers lequel la lumière visible peut être émise pour rendre visible la zone d'actionnement (22) pour l'utilisateur (10).

17. Module de montage (20) selon la revendication 15,
**caractérisé en ce que**
pour identification de la volonté d'utilisateur, un mouvement prédéfini à l'intérieur d'une durée d'actionnement b doit avoir lieu, s'agissant notamment pour le mouvement prédéfini d'un mouvement d'une partie corporelle (11, 12) de l'utilisateur (10) dans ou sur la zone d'actionnement (22) et/ou d'un mouvement de la partie corporelle (11, 12) dans la zone d'actionnement et/ou depuis la zone d'actionnement.

18. Module de montage (20) selon l'une quelconque des revendications précédentes,
**caractérisé en ce que**
dans une vue de dessus, la zone de détection (21) comporte une extension spatiale plus grande que la zone d'actionnement (22), la zone d'actionnement (22) dans une vue de dessus se trouvant notamment à l'intérieur de la zone de détection (21).

19. Module de montage (20) selon l'une quelconque des revendications précédentes,
**caractérisé en ce que**
le capteur optique (50) et/ou le module lumineux (40) sont constitués pour être utilisés tant pour la surveillance de la zone de détection (21) que pour la surveillance de la zone d'actionnement (22).

20. Module de montage (20) selon l'une quelconque des revendications précédentes,
**caractérisé en ce que**
le capteur optique (50) et/ou le module lumineux (40) comportent un systeme à lentille rigide (42, 51).

21. Système d'authentification (16) avec un système de contrôle d'accès (14), un émetteur d'identifiant (ID) (13) et un module de montage (20) selon l'une quelconque des revendications précédentes.

22. Procédé (70) pour déclencher au moins un signal pour un véhicule automobile (1) avec les étapes suivantes:
c) surveillance d'une zone de détection (21) se trouvant en dehors du véhicule automobile (1) par un système de détection optique (30) pour constater une proximite d'un utilisateur (10),
d) déclenchement d'un signal pour la mise en marche d'un contrôle d'authentification entre un émetteur d'identifiant (ID) (13) et un système de contrôle d'accès (14) du véhicule automobile (1) en cas d'une identification de l'utilisateur (10) dans la zone de détection (21),
**caractérisé en ce que**
le système de détection optique (30) peut être connecté entre un mode de repos et un mode de fonctionnement, une fréquence d'image en mode de repos étant plus faible qu'en mode de fonctionnement, à condition que
le système de détection optique (30) est constitué pour surveiller la zone de détection (21) près d'un véhicule automobile arrêté (1) depuis l'arrêt du véhicule automobile (1) jusqu'à une authentification réussie, et, ce faisant, de prendre et/ou d'évaluer une image après chaque intervalle de temps t prédéfini, l'intervalle de temps t étant choisi plus grand en mode de repos qu'en mode de fonctionnement, à condition que
la lumière émise par le module lumineux (40) est puisée, la fréquence de pulsion étant notamment en mode de repos plus faible qu'en mode de fonctionnement,
le procédé pouvant être exécuté avec un module de montage selon l'une quelconque des revendications 1 à 20.
